Europäisches Patentamt

European Patent Office

Office européen des brevets

(11) Publication number: **0 671 860 A1**

# EUROPEAN PATENT APPLICATION

(21) Application number: 94200550.5

(22) Date of filing: 04.03.94

(51) Int. Cl.⁶: **H04Q 11/04**, H04L 12/56

(43) Date of publication of application:
**13.09.95 Bulletin 95/37**

(84) Designated Contracting States:
**BE DE ES FR GB IT NL SE**

(71) Applicant: **BELL TELEPHONE**
**MANUFACTURING COMPANY Naamloze**
**Vennootschap**
**Francis Wellesplein 1**
**B-2018 Antwerp (BE)**

(84) **BE DE ES FR GB IT NL SE**

(72) Inventor: **Petit, Guido Marguerite**
**Van Schoonbekestraat 137A**
**B-2018 Antwerp (BE)**
Inventor: **Van Mieghem, Piet**
**Gellenberg 78**
**B-3210 Lubbeek (BE)**

(54) FIFO buffer arrangement with delayed push-out.

(57) A FIFO buffer arrangement is proposed that includes a transmit control means (TAM) for controlling a transmission means (TU) to transmit a cell read from a buffer or shift register (SR) always when this cell has a high priority, either to transmit or discard this cell based on a buffer occupancy parameter (POCV) when it has a low priority and when a number of consecutively discarded cells is smaller than a predetermined number and to transmit this cell if this number equals this predetermined number.

By appropriately choosing the buffer occupanecy parameter as the number of low priority cells which would have been pushed out in a so called push-out buffer, the proposed buffer can be guaranteed to have a close to ideal performance whilst only requirong little extra buffer space as compared to an equivalent push-out buffer.

FIG. 1

The present invention relates to a First In First Out buffer arrangement including a buffer register, a write means for queueing in said buffer register incoming cells having a plurality of distinct priorities and transmission means for reading and transmitting thus queued cells.

Such First In First Out or FIFO buffer arrangements are already known in the art, e.g. from the article "Priority management in ATM switching nodes", by H. Kröner et al., IEEE Journal on Selected Areas in Communications, Vol. 9, NO. 3, April 1991, pp. 418-427. Therein it is described that such buffer arrangements should allow to obtain distinct Qualities of Service or Qos for cell streams with distinct priorities such that a same network may be used to offer a plurality of service classes dependent on cell priorities. Particularly, in the above context, the FIFO buffer arrangements should offer distinct cell loss ratios for cells of distinct priorities. The mentioned article proposes two FIFO buffer arrangements which may be used to the above end, these arrangements being referred to as "push-out" and "partial buffer sharing" buffers respectively. They are briefly discussed hereinbelow referring to a general Asynchronous Transfer Mode or ATM context as in the above article where the cells either have a high or a low priority.

In the push-out buffer high priority cells push out low priority cells and low priority cells are not admitted to the buffer when the latter is filled, thus clearly ensuring a lower cell loss ratio for high priority cells. As concluded in the referenced article, this mechanism allows to achieve an ideal performance but requires rather complex buffer control logic since buffered low priority cells need constantly be monitored and because the actual push-out operation is a complex rearrangement procedure within the buffer in order to preserve the cell sequence of the queued cells.

The partial buffer sharing buffer on the other hand is split in two sections, one of which is reserved for high priority cells and is hence clearly more simple to implement. However, and as also disclosed in the above paper, the latter approach is characterized by a sub-optimal performance which means in particular that for similar requirements the buffer register should be longer than with a push-out buffer. It is to be noted that this sub-optimal performance amongst others derives from the fact that partial buffer sharing is static with regard to the actually received traffic patterns, i.e. this pattern is not taken into account for making the discard decisions.

As can be verified from the above, known selective discard mechanisms either are prohibitively complex in order for them to be implemented or do not achieve the above known ideal performance. Both drawbacks boil down to an increase in chip area which is especially disadvantageous in the present field of broadband communications.

An object of the present invention is therefore to provide a buffer arrangement of the above selective discard type but which allows to obtain a better trade-off between performance and complexity, i.e. which approximates the ideal performance with relatively simple control logic.

This object is achieved by virtue of the fact that said buffer arrangement includes a transmit control means for controlling said transmission means to always transmit thus read cells of a highest of said priorities, to transmit or discard thus read cells of a lower priority based on a buffer occupancy parameter when a number of consecutively discarded cells is smaller than a predetermined number and to transmit thus read cells of said lower priority when said number is equal to said predetermined number.

The invention is based on the insight that through selectively discarding low priority cells at the output rather than at the input of the FIFO buffer, the above ideal push-out buffer may be emulated without the need for complex buffer control logic. Indeed, the buffer occupancy parameter may for instance be chosen so as to reflect the number of low priority cells which would have been pushed out in the above ideal push-out buffer mechanism as described lateron. In that case it is clear that in the above way the push-out operation is merely delayed until a low priority cell becomes available at the outputt of the buffer and thus that a similar performance to that of the push-out buffer may be achieved provided that some extra buffer space is available in order to account for the delay with which a push-out operation may be carried out.

It is to be noted that the extra buffer space with respect to an equivalent push-out buffer is relatively small since the above delay is relatively small for a conventional priority mix and conventional QoS requirements and since the present buffer may, in contrast to the partial buffer sharing buffer, dynamically take into account the actually received traffic pattern by appropriately choosing the buffer occupancy parameter to be a function of the number and/or kind of the previously received cells.

A further advantage of selectively discarding cells at the output instead of the input of the FIFO buffer is that in the latter case it is not exactly known how many cells may be simultaneously received by the buffer since the buffer may be filled from a large number of distinct sources. Therefore, it is difficult to implement a selective discard mechanism at the input of the buffer. In contrast herewith, it is exactly known that only one cell may exit the buffer per transmission cycle and it is therefore much easier to selectively discard cells at the output by consecutively checking at most a fixed predetermined number of cells per transmission cycle and by transmitting either the first one of these cells eligible for transmission or the final cell which may be read within the same transmission cycle.

In a first embodiment of the present invention the operation of the push-out buffer is emulated as accurately as possible. The advantage is that the performance of the buffer is close to the mentioned ideal performance and is guaranteed since this ideal performance is already proven for the push-out buffer. Moreover, the performance of a push-out buffer and therefore also that of such an embodiment is extensively described such that taking into account the implications of such a buffer for the network and particularly for the call admission control therein is more simple.

A characteristic feature of this first embodiment is that said arrangement also includes for each one of said lower priorities a push-out count means deriving a push-out count value assigned to said one lower priority as well as a write control means controlling said push-out count means to increment said push-out count value if a said cell is queued in said register when its filling level is larger than or equal to a threshold assigned to said one lower priority, and that said transmit control means controls said transmission means to discard a cell of said one lower priority when said push-out count value is strictly positive and controls said push-out count means to decrement said push-out count value if a said cell of said one lower priority is so discarded.

In so doing the above buffer occupancy parameter is indeed chosen so as to keep track of the number of cells of low priority which would have been pushed out in a push-out buffer with a length equal to the above threshold.

A further feature of the present embodiment is that said write control means also controls said write means to discard a said cell of said one lower priority when said filling level is larger than or equal to said threshold value assigned to said one priority and to queue it otherwise.

In order to be able to exactly emulate the push-out buffer such an input test by the write means is needed since, when the buffer is filled over the above threshold equal to the length of an equivalent push-out buffer, the low priority cells received after this point would indeed have also been discarded in this equivalent buffer due to overflow.

Yet a further feature of the present embodiment is that said write control means derives said threshold value assigned to said one lower priority by adding said push-out count value assigned to said one priority to a predetermined threshold value.

With respect to the above feature it is to be noted that the above assertion that the threshold equals the length of an equivalent push-out buffer only holds as a first approximation. Indeed, upon closer inspection it appears that the above predetermined threshold value corresponds to the length of this equivalent buffer since, if the push-out count value is positive, this means that in the present buffer a number of low priority cells is queued which would have already been pushed out in the equivalent buffer. In this case it is clear that exact emulation of the operation of a push-out buffer is tantamount to establishing the threshold in the above way as the sum of a predetermined threshold equal to the length of the equivalent buffer with the push-out count value, i.e. the number of low priority cells still needing to be pushed out.

A final feature of the present invention leading to an as close as possible approximation of the push-out buffer operation is that said arrangement also includes for each one of said higher priorities a cell count means deriving a cell count value assigned to said one higher priority, said write control means controlling said cell count means to increment said cell count value when a cell of said one higher priority is queued, and also controlling said write means to discard a said cell of said one higher priority if said cell count value is equal to or larger than said predetermined threshold value and in that said transmit control means also controls said cell count means to decrement said cell count value when a said cell of said one higher priority is to be transmitted or discarded by said transmission means.

The latter measure is needed since it is clear that in the equivalent push-out buffer no more high priority cells can be queued than indicated by the mentioned predetermined threshold since the latter equals the length of this buffer. Cells in excess of this threshold would have to be discarded in the equivalent buffer due to overflow such that the exact emulation requires a further input test and count value so as to avoid that such cells be queued in the present buffer.

It is finally noted with respect to this embodiment that it is inherent to the present invention that emulation of the equivalent push-out buffer is always restricted by the extra buffer space provided in excess of the length of this equivalent buffer. However, it may be verified that whilst exact emulation would require a buffer of twice the length of the equivalent buffer, only a very limited amount of extra buffer space is needed in order to get a performance that is indiscernable from that of the equivalent buffer for the reasons already stated above. Moreover and advantageously this amount is reduced the longer the length of the push-out buffer and the smaller the cell loss ratios that are to be provided thereby.

Whereas in the first embodiment emphasis is put on an exact emulation of the operation of a push-out buffer, the present invention allows other trade-offs of performance and complexity and more particularly allows to reduce the amount of control logic with respect to the above first embodiment. Therefore, in a second embodiment of the invention the buffer performance is traded off against implementation complexity. The performance degradation resulting from such a trade off is mitigated by the fact that the extra buffer space may be chosen larger for a same chip area if less complex control logic is required.

A characteristic feature of this second embodiment is that said arrangement also includes a transmit control means controlling said transmission means to discard a said cell of one of said lower priorities when the filling level of said buffer register is equal to or larger than a threshold value assigned to said one lower priority.

It is clear that in choosing the buffer occupancy parameter in the above way, a more simple buffer is obtained which however does not allow to accurately emulate a push-out buffer but which still allows to operate according to general principles laid out above. Indeed, the filling level of the buffer will normally be directly indicative of the number of low priority cells which would have been pushed out in using a conventional push-out buffer.

A further characteristic feature of the embodiment are that said threshold value is variable and is a function of the ratio of the number of received cells of a priority higher than said one lower priority to the number of received cells of a priority equal to or lower than said one lower priority and in that said threshold value increases if said ratio decreases.

This refinement allows to better approximate the above ideal performance since the used buffer occupancy parameter and corresponding threshold give a better indication of the number of low priority cells that have to be pushed out. Indeed, in this way the priority mix of incoming cells is taken into account via a variable threshold which is a function of this priority mix and this is clearly tantamount to a better approximation of a push-out buffer as therein less/more low priority cells are pushed out when less/more high priority cells are received by the buffer.

Still another characteristic feature of this second embodiment is that said arrangement also includes a write control means controlling said write means to discard a cell of said one lower priority if said filling level is equal to or larger than said threshold value assigned to said one lower priority.

From the above it follows that the invention allows to combine both the partial buffer sharing and the push-out buffer mechanisms in order to improve the performance of the present buffer without increasing too much the implementation complexity.

It is to be finally noted that, whilst in the above reference is only made to two priorities for clarity's sake, the present invention can be straightforwardly applied to situations wherein more than two priorities should be considered. Indeed, the latter requires to define the thresholds and push-out count values for each except the highest priority as well as to define the cell count values for each priority except the lowest. Obviously, it should then also be borne in mind that the above threshold values decrease in magnitude for decreasing priority levels.

The above mentioned and other objects and features of the invention will become more apparent and the invention itself will be best understood by referring to the following description of an embodiment taken in conjunction with the accompanying drawings wherein:

Fig. 1 schematically represents a first embodiment of a First In First Out buffer arrangement in accordance with the present invention; and,

Fig. 2 schematically represents a second embodiment of a First In First Out buffer arrangement in accordance with the present invention;

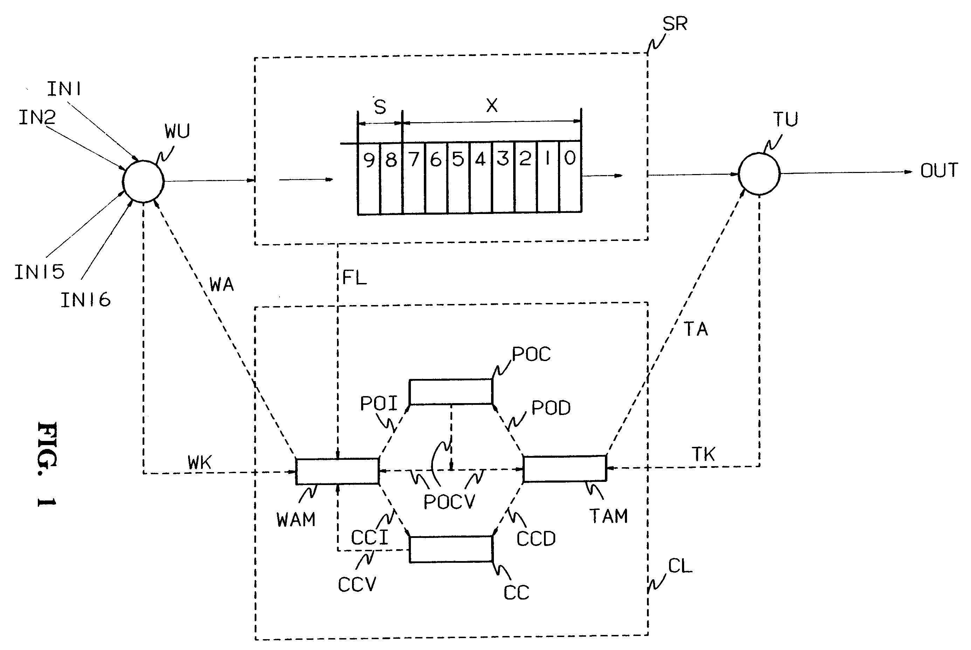

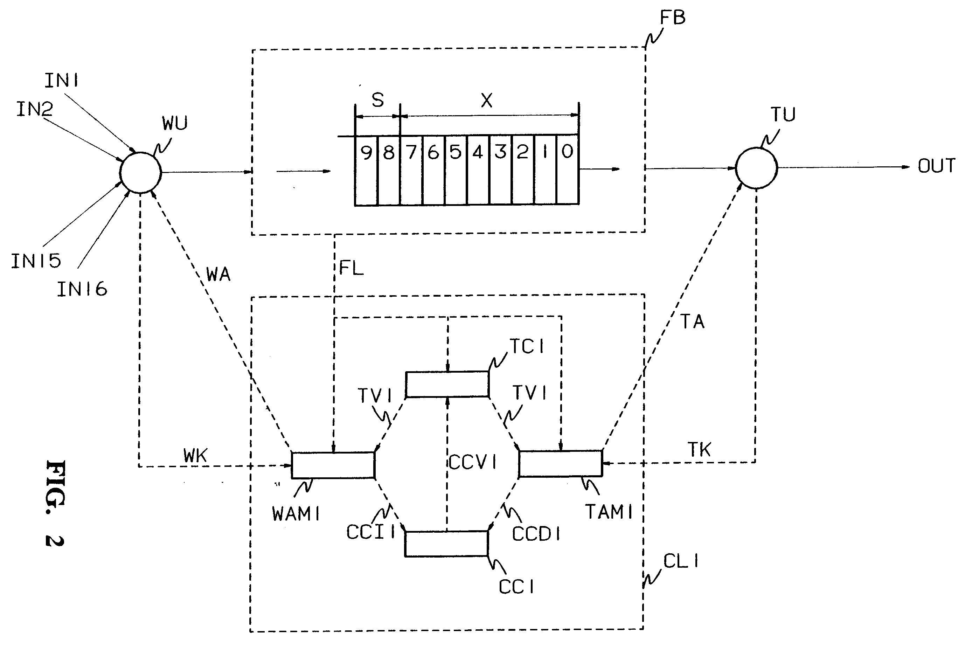

The First In First Out or FIFO buffer arrangements depicted in Figs. 1 and 2 are for instance used in Asynchronous Transfer Mode or ATM switching elements and allow that a switching network is built which offers distinct Qualities of Service or QoS for low and high priority cells by having distinct cell loss ratios for these priorities. As already well known in the art, this is needed to be able to better allocate network resources in view of the presence of dis tinct types of traffic each requiring a specific QoS.

The two FIFO buffer arrangements shown each include a buffer or shift register SR, a write unit WU, a transmission unit TU and a control logic CL and CL1 respectively, the control logics CL and CL1 described lateron slightly differ but these differences have no impact on the general operation principle of both embodiments. Therefore, in a first part of this description the general operation principle is described without making reference to the detailed operation of control logics CL and CL1.

The write unit WU has a plurality of inputs IN1 to IN16 corresponding to the inlets of an above mentioned switching element and via which ATM cells of high or low priority are forwarded to the FIFO buffer arrangements where they are queued in the buffer register SR. The transmit unit TU reads the so queued ATM cells from the output of this register SR and transmits them on an output OUT which corresponds to one of the outlets of the above mentioned switching element.

The operation of the FIFO buffer arrangements differ from that of conventional arrangements in that the control logic CL or CL1 controls both the write and transmit units, WU and TU respectively, to selectively discard some of the cells which are handled thereby. To this end the latter units WU and TU generate for each processed cell an activation signal, WK and TK respectively, which not only indicates that a cell has to be served by the corresponding unit but also indicates the cell priority, i.e. high or low. In response to these activation signals, WK and TK, control logics CL or CL1 generate authorization signals, WA and TA respectively, that indicate to a corresponding unit whether to serve a cell for which the control logic is presently activated or to discard this cell.

More particularly, the write unit WU only queues a received cell if the resulting write authorization signal WA is activated (logic 1) and discards this cell otherwise. In a similar way the transmission unit TU only transmits a cell read by it when the resulting transmit authorization signal TA is activated and again discards it when TA is deactivated (logic 0).

With reference to Fig. 1 the generation of the above mentioned authorization signals WA and TA in the first embodiment, i.e. with the control logic CL, is described in more detail. This control logic CL comprises a transmit and a write control or authorization module, TAM and WAM, a push-out counter POC and a high priority cell counter CC, both the latter counters POC and CC being of the updown or increment-decrement type.

The write authorization module WAM generates the mentioned write authorization signal WA in function of the received activation signal WK, as well as of a received cell count value CCV provided by a cell counter CC, of a received push-out count value POCV produced by a push-out counter POC and of a received filling level FL which indicates the number of presently queued cells and which is produced by obvious logic associated to the buffer register SR. Furthermore, the latter module WAM generates from these received values a push-out increment signal POI which controls the push-out counter POC such that it increments POCV, as well as a cell count increment signal CCI which controls the cell counter CC such that it increments the cell count value CCV.

In its turn the above transmit authorization module TAM derives the mentioned transmit authorization signal TA in function of the activation signal TK and of the above push-out count value POCV. Furthermore, TAM generates from these values a push-out decrement signal POD controlling the push-out counter POC such that it decrements POCV and a cell count decrement signal CCD controlling the cell counter CC such that it decrements CCV.

With the above description of the structure of the control logic CL in mind, the operation of the authorization modules WAM and TAM will now be described in detail.

Considering firstly WAM, the latter operates as follows for each cell received by WU. If WK indicates that the received present cell is a low priority cell it is checked whether or not the filling level FL is smaller than a threshold value obtained by adding POCV to a predetermined threshold value X corresponding to a length of an equivalent push-out buffer, as explained lateron. In the first case, the write authorization signal WA is deactivated in response to which WU discards the present low priority cell, whereas in the second case, i.e. when the filling level is equal to or larger than the above threshold value, WA is activated as a consequence of which WU queues the present low priority cell in the buffer register SR.

On the other hand, when WK indicates that the cell which has been received by WU is of the high priority, it is checked if the cell count value CCV is smaller than the above predetermined threshold value X in which case WU is instructed via activation of WA to queue the cell. If CCV is, on the other hand, equal to the above mentioned threshold value X, WU is instructed in a similar way via deactivation of WA to discard the present high priority cell.

Furthermore, if the received high priority cell is queued WAM controls the cell counter CC via the signal CCI to increment the cell count value CCV. In a similar way for each such high priority cell for which FL is larger than the above sum of X and POCV, WAM controls the push-out counter POC via the signal POI to increment the push-out count value POCV.

Finally, with respect to WAM it is to be noted that when the filling level FL is equal to the total length of the buffer register, i.e. equal to $X+S$ wherein S is the number of register positions in excess of the above equivalent push-out buffer register length X, then WAM instructs WU to discard any cell received during the period when FL has such a value and regardless of its priority. Indeed, the above value for FL is tantamount to buffer overflow as all register positions are filled.

Considering secondly TAM, the latter operates as follows for each cell which is read by TU. When the read cell is of the high priority, TAM always instructs TU via TA to transmit this cell and also indicates to the cell counter CC via the signal CCD that the cell count value CCV needs to be decremented. On the other hand, when the read cell is a low priority cell the push-out count value POCV is checked. If this value is larger than zero, TAM generates the signals TA and POD in such a way as to indicate to TU that this cell is to be discarded and to the push-out counter that POCV needs to be decremented respectively. If this value is conversely equal to zero, this means that no further low priority cells are required to be pushed out and TAM instructs TU via TA to transmit the present low priority cell.

With respect to the latter detail of TAM, it is to be noted that TU activates TAM a number of times per transmission cycle, or per cell time slot on the output OUT, via TK until from the buffer register SR a cell is read which may be transmitted according to the above rules. It is clear that this may only be done for a limited number of cells per such transmission cycle or cell time slot and that for this reason TAM also keeps track of the number of cells consecutively discarded. Regardless of the cell priority TAM instructs TU to transmit this cell if this number equals the above limited number. Indeed, if the latter extra check were not performed it could happen that an idle cell is transmitted whilst the buffer register SR would still be filled which would clearly constitute an unnecessary waste of bandwidth on the output link OUT.

From the above description it may be verified that the present buffer behaves in the same way as a conventional push-out buffer with length X as explained briefly hereafter.

In this equivalent push-out buffer a high priority cell immediately upon its receipt pushes out a low priority cell already queued, whereas presently such a push-out operation is only emulated after some delay by a discard operation performed by the transmission unit TU. This means particularly that meanwhile some extra buffer space S is required in order to account during these delays for the excess amount of queued cells with respect to the above push-out buffer of length X. Furthermore, the push-out count value POCV is required in order to keep track of the number of low priority cells still awaiting a push-out or discard operation by TU. Therefore POCV is incremented for any high priority cell queued in the buffer register SR and which would push-out a low priority cell in the equivalent buffer and decremented for every low priority cell effectively discarded by TU.

It is also clear that a threshold value obtained by adding POCV to X is to be used by WAM so as to be able to determine when POCV needs to be incremented, as well as when a low priority cell must be discarded upon its receipt because it would cause buffer overflow in the equivalent push-out buffer. Indeed, when in the present buffer low priority cells are still stored which would have been pushed out in an above equivalent buffer, it is clear that a number of cells equal to POCV are stored in the present buffer which would not have been stored in the equivalent buffer. Therefore the threshold value mentioned above is clearly needed in order that the above two actions should be equivalent to the operation of the push-out buffer.

Finally, it is clear that the cell count value CCV keeps track of the number of high priority cells that are actually queued in the buffer register SR. It is therefore also clear that when this number equals X, further received high priority cells need to be discarded since also in the above equivalent buffer at most X high priority cells may be queued simultaneously.

With respect to the emulation of a push-out buffer, it is to be noted that the accuracy thereof clearly depends on the amount of extra buffer space S provided with respect to the length X of the equivalent buffer. Whilst it may be verified that exact emulation may only be achieved with S equal to X, it may equally well be verified that it normally suffices to take S much smaller and for instance typically equal to one tenth of X.

In the second embodiment of the present invention shown in Fig. 2 the alternative control logic CL1 includes again a write and a transmit authorization module, WAM1 and TAM1 respectively, a cell counter CC1 and also a threshold calculator TC1. In this control logic CL1 both TAM1 and WAM1 generate their corresponding authorization signals TA and WA in function of the corresponding activation signals, TK and WK respectively, of the filling level FL that is produced by the buffer register SR and of the threshold value TV1 derived by TC1 from a cell count value CCV1 and the filling level FL. Again the cell counter CC1 is of the increment/decrement type and is controlled by an increment signal CCI1 generated by WAM1 as well as by a decrement signal CCD1 generated by TAM1.

In the control logic CL1, WAM1 instructs the write unit WU via WA to queue each received high priority cell provided only that the buffer register SR is not completely filled whilst for received low priority cells WA is activated only when the filling level FL does not exceed TV1. Also, WAM1 instructs CC1 via CCI1 to increment the cell count value for each queued high priority cell. Similarly, TAM1 instructs the transmission unit TU via TA to transmit each read cell of the high priority, whereas read low priority cells are transmitted only when the filling level FL does not exceed TV1 and otherwise to discard such a low priority cell. Also, TAM1 controls CC1 to decrement the cell count value CCV1 via the signal CCD1 for each transmitted high priority cell. Further and as with the previous embodiment, TAM1 ensures that only a limited number of low priority cells are consecutively discarded.

From the above it is already clear that the second embodiment operates according to the same general principle as the above first embodiment since again the transmission unit TU is controlled to discard low priority cells dependent upon a buffer occupancy parameter, i.e. the filling level FL, which is indicative of the amount of low priority cells which would have been pushed out in a push-out buffer. However, the latter relation between the filling level FL and the amount of cells to be pushed out is no longer an exact relation such that the operation of the present buffer cannot exactly equal that of a push-out buffer. The latter performance is clearly traded off for a more simple control logic CL1 which might for instance allow to increase the extra buffer space S with respect to the above mentioned push-out buffer of length X.

However, and as clarified hereafter, the operation of the present buffer is still improved by the operation of the threshold calculator TC1 which allows to determine this threshold value in such a way that it stands in a more exact relation to the above mentioned number of low priority cells which have to be pushed out in order to exactly emulate a push-out buffer.

Therefore, TC1 determines the ratio of the numbers of high and low priority cells actually stored in the shift register SR by dividing the cell count value CCV1, indicative of the number of high priority cells actually stored in SR, by the filling level FL. This ratio is henceforth called $\alpha$ and used to determine the threshold TC1 according to the following formula

$$TC1 = TC_{min} * \alpha + (1-\alpha) TC_{max}.$$

By determining TC1 in the above way it is clearly obtained that low priority cells are more easily discarded when more high priority cells are stored in SR since then the threshold TC1 tends to its minimum value. Conversely, the low priority cells are less easily discarded when less cells of the high priority are stored in SR since then TC1 tends to its maximum value which for instance equals the above length of the equivalent push-out buffer X. The above behaviour is verifiably similar to that of a push-out buffer since therein less/more low priority cells are pushed out dependent upon the reception of less/more high priority cells.

While the principles of the invention have been described above in connection with specific apparatus, it is to be clearly understood that this description is made only by way of example and not as a limitation on the scope of the invention.

**Claims**

1. First In First Out buffer arrangement including a buffer register (SR), write means (WU) for queueing in said buffer register incoming cells having a plurality of distinct priorities and transmission means (TU) for reading and transmitting thus queued cells, characterized in that said buffer arrangement further includes a transmit control means (TAM; TAM1) for controlling said transmission means (TU) to always transmit thus read cells of a highest of said priorities, to transmit or discard thus read cells of a lower priority based on a buffer occupancy parameter (POCV; FL) when a number of consecutively discarded cells is smaller than a predetermined number, and to transmit thus read cells of said lower priority when said number is equal to said predetermined number.

2. First In First Out buffer arrangement according to claim 1, characterized in that said arrangement also includes for each one of said lower priorities a push-out count means (POC) deriving a push-out count value (POCV) assigned to said one lower priority as well as a write control means (WAM) controlling (POI) said push-out count means to increment said push-out count value if a said cell is queued in said register (SR) when its filling level (FL) is larger than or equal to a threshold (X + POCV) assigned to said one lower priority, and in that said transmit control means (TAM) controls (TA) said transmission means (TU) to discard a cell of said one lower priority when said push-out count value (POCV) is strictly positive and controls (POD) said push-out count means to decrement said push-out count value if a said cell of said one lower priority is so discarded.

3. First In First Out buffer arrangement according to claim 2, characterized in that said write control means (WAM) also controls (WA) said write means (WU) to discard a said cell of said one lower priority when said filling level (FL) is larger than or equal to said threshold value (X + POCV) assigned to said one priority and to queue it otherwise.

4. First In First Out buffer arrangement according to claim 3, characterized in that said write control means (WAM) derives said threshold value (X + POCV) assigned to said one lower priority by adding said push-out count value (POCV) assigned to said one priority to a predetermined threshold value (X).

5. First In First Out buffer arrangement according to claim 4, characterized in that said arrangement also includes for each one of said higher priorities a cell count means (CC) deriving a cell count value (CCV) assigned to said one higher priority, said write control means (WAM) controlling (CCI) said cell count means to increment said cell count value when a cell of said one higher priority is queued, and also controlling said write means (WU) to discard a said cell of said one higher priority if said cell count value is equal to or larger than said predetermined threshold value (X) and in that said transmit control means (TAM) also controls (CCD) said cell count means to decrement said cell count value when a said cell of said one higher priority is to be transmitted or discarded by said transmission means (TU).

6. First In First Out buffer arrangement according to claim 1, characterized in that said arrangement also includes a transmit control means (TAM1) controlling (TA) said transmission means (TU) to discard a said cell of one of said lower priorities when the filling level (FL) of said buffer register (SR) is equal to or larger than a threshold value (TV1) assigned to said one lower priority.

7. First In First Out buffer arrangement according to claim 6, characterized in that said threshold value (TV1) is variable and is a function of the ratio ($\alpha$) of the number of received cells of a priority higher than said one lower priority to the number of received cells of a priority equal to or lower than said one lower priority and that said threshold value (TV1) increases if said ratio decreases.

8. First In First Out buffer arrangement according to claim 7, characterized in that said threshold value (TV1) is a linear function of the ratio ($\alpha$) of the number of queued cells of a priority higher than said one lower priority to said filling level (FL).

9. First In First Out buffer arrangement according to claim 6, characterized in that said arrangement also includes a write control means (WAM1) controlling (WA) said write means (WU) to discard a cell of said one lower priority if said filling level (FL) is equal to or larger than said threshold value (TV1) assigned to said one lower priority.

10. First In First Out buffer arrangement according to any of the previous claims, characterized in that said cells either have a high or a low priority and are Asynchronous Transfer Mode cells.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | SUPERCOMM/ICC 1992, vol.2 OF 4, 14 June 1992, CHICAGO pages 997 - 1003, XP000326821 R. BERALDI AND S. MARANO 'Limiting removal depth in the pushout scheme for atm networks.' * page 997, right column, line 37 - page 998, right column, line 5 * | 1-3,5,9, 10 | H04Q11/04 H04L12/56 |
| A | IEICE TRANSACTIONS ON COMMUNICATIONS, vol.E76-B, March 1993, TOKYO pages 249 - 257, XP000303997 TIEN-YU HUANG, JEAN-LIEN CHEN WU AND JINGSHOWN WU 'Priority management to improve the QoS in ATM networks.' * page 250, left column, line 32 - right column, line 5 * | 1 | |
| A | GLOBECOM '92, vol.1, 6 December 1992, ORLANDO pages 308 - 313, XP000357801 H.J. CHAO AND N. UZUN 'An ATM queue manager with multiple delay and loss priorities.' * page 309, left column, line 43 - right column, line 44; figure 3 * | 1 | |

TECHNICAL FIELDS
SEARCHED     (Int.Cl.6)

H04L
H04Q

The present search report has been drawn up for all claims

| Place of search | Date of completion of the search | Examiner |
|---|---|---|
| THE HAGUE | 29 July 1994 | Veen, G |

EPO FORM 1503 03.82 (P04C01)